(19) Europäisches Patentamt
European Patent Office
Office européen des brevets

(11) Numéro de publication: **0 010 519**
**A1**

(12) # DEMANDE DE BREVET EUROPEEN

(21) Numéro de dépôt: **79810120.0**

(22) Date de dépôt: **10.10.79**

(51) Int. Cl.³: **C 08 B 15/00**

(30) Priorité: **12.10.78 CH 10582 78**

(43) Date de publication de la demande: **30.04.80 Bulletin 80/9**

(84) Etats Contractants Désignés: **AT BE CH DE FR GB IT LU NL SE**

(71) Demandeur: **BATTELLE MEMORIAL INSTITUTE**
**7 route de Drize**
**CH-1227 Carouge/Genève(CH)**

(72) Inventeur: **Sachetto, Jean-Pierre**
**Rue de Savoie 3 L'Escalade, Bat D2**
**F-74160 Saint-Julien-en-Genevois(FR)**

(72) Inventeur: **Bellmann, Günter**
**Chemin de la Dauphine**
**CH-1299 Commugny(CH)**

(72) Inventeur: **Roman, Alain**
**Les Ecureuils 6**
**F-74160 Bossey(FR)**

(72) Inventeur: **Bouchez, Patrick**
**Résidence du Country Club App. 16**
**Avenue François 1er F-62152 Hardelot(FR)**

(74) Mandataire: **Dousse, Blasco et al,**
**7, route de Drize**
**CH-1227 Carouge/Genève(CH)**

(54) **Procédé pour réticuler la carboxyméthyl-cellulose et produits obtenus suivant ce procédé.**

(57) On réticule la carboxyméthylcellulose (CMC) et ses dérivés en la faisant réagir avec un carbodiimide. On obtient, par cette réaction, des produits hydrophiles dont la viscosité, en solution aqueuse est très élevée, et qui, dans certains cas fournissent même des gels hydratés. Ces gels sont autodégradables et éliminables sans causer de pollution. La CMC ainsi réticulée peut être stabilisée par adjonction d'amines de p[illegible]ols ou d'acides organiques ainsi que d'acides aminés.

EP 0 010 519 A1

PROCEDE POUR RETICULER LA CARBOXYMETHYL-CELLULOSE ET PRODUITS OBTENUS SUIVANT CE PROCEDE

Domaine Technique

La présente invention a pour objet un procédé de réticulation de la carboxyméthylcellulose (CMC) et certains de ses dérivés, notamment les hydroxyalcoyl-carboxymethyl-celluloses.

On sait que les composés de la cellulose appelés de façon générale "carboxyméthylcelluloses" sont des dérivés cellulosiques dont certains des groupes hydroxy, et plus particulièrement les hydroxy primaires, sont remplacés, en partie, notamment par des groupes "carboxyméthoxy" $HOOC-CH_2-O-$ dont la salification, par exemple par les métaux alcalins, entraîne une bonne solubilité du polymère dans l'eau. Outre les groupes "carboxyméthyl", ces composés peuvent encore contenir, suivant les types de substances, des groupes additionnels hydroxyalcoxy HO-alk-O-, plus particulièrement, des groupes hydroxyméthyl, hydroxyéthyl, hydroxypropyl, etc. La présente invention concerne la réticulation de tous ces types de dérivés de la cellulose contenant, tout au moins, un certain taux de groupes "carboxyméthyl", par exemple, des taux de substitution de 0,2 à 0,8, les -OH primaires restants étant, soit libres, soit substitués par des groupes hydroxyalcoyl. Dans ce qui suit, ces composés, salifiés ou non, seront désignés par le terme générique de "carboxyméthylcelluloses", abrégé CMC.

Les carboxyméthyl-celluloses en solution sont des épaississants utilisés pour de nombreuses applications industrielles dans les domaines suivants : textiles, pharmacie, cosmétique, industrie alimentaire, industrie mécanique (liquides de coupe), industrie

minière (boues de forage), etc. mais, bien souvent, la viscosité de telles solutions n'est pas encore suffisante pour les buts recherchés et il est désirable d'obtenir des solutions avec une viscosité très élevée (ou même des produits sous forme de gels) en n'utilisant, en poids, qu'un minimum de solide de départ.

Technique antérieure

Pour ce faire on a déjà proposé un certain nombre de méthodes pour réticuler les dérivés cellulosiques, à savoir :

1. La réticulation par l'épichlorhydrine décrite dans l'article suivant : Cross-linked Derivatives (CLD) Fibers as Binders for NonWovens, W.L. DEAN (THE BUCKEYE CELLULOSE CORP.), International Nonwoven and Disposable Association (INDA); Second Technical Symposium, Washington D.C., March 6, 1974.

2. Réticulation par estérification partielle des groupes -OH libres de la CMC par les groupes -COOH; voir AQUALON® Bulletin VC-494B (HERCULES INC. Wilmington, Del. USA).

3. Réticulation par adjonction de métaux lourds; voir Water Solubles Polymers, R.H. FRIEDMAN, Polymer Science & Technology, Vol. 2 (1973); Brevet USP No 3,845,822.

4. Réticulation par les composés dihalogénés en milieu alcalin, Brevet USP No 2,971,815 (UNITED STATES OF AMERICA).

Cependant, prises individuellement, de telles méthodes fournissent, soit des CMC réticulées solubles dans l'eau, soit des fibres insolubles hydrophiles à capacité d'absorption d'eau élevée. Il était donc désirable de disposer d'un procédé permettant, à volonté et suivant les conditions de travail et le choix des réactifs, d'obtenir une gamme complète de produits réticulés de nature similaire au point de vue chimique mais donnant, par dissolution dans l'eau, soit des solutions de viscosités choisies, soit des gels plus ou moins hydratés.

Par ailleurs, il est souvent désirable d'obtenir des matières solides très hygroscopiques et absorbant bien l'eau mais qui, après un certain temps, se dégradent et se liquéfient de manière naturelle et peuvent ainsi être éliminés par lavage à l'eau sans produire de pollution.

Exposé de l'invention

On parvient à ce but en réticulant la CMC suivant le procédé

de l'invention qui est caractérisé par le fait qu'on réticule la CMC avec un carbodiimide (réaction a), ce qui fournit une CMC réticulée désignée par (I) dans ce qui suit.

Pour ce faire on peut travailler en milieu hétérogène (suspension de CMC mélangée avec un carbodiimide dans un liquide porteur) ou, mieux, dans un milieu où le carbodiimide et la CMC sont solubles, ou, tout au moins, partiellement solubles. Ainsi, de préférence, on emploie comme solvant des milieux aqueux tels que l'eau ou des mélanges d'alcools inférieurs et d'eau.

Meilleures manières de réaliser l'invention

La quantité de carbodiimide à utiliser par rapport à la quantité de CMC sera, de préférence, dictée par le degré de substitution en groupe $-CH_2-COOH$ de celle-ci. En général, on pourra utiliser 0,1 à 2 équivalents molaires de carbodiimide par groupe -COOH disponible cependant ces valeurs peuvent être outrepassées dans certains cas tout en tenant compte du fait que des quantités trop faibles de carbodiimide ne produisent pas un taux suffisant de réticulation, tandis que des quantités trop fortes sont sans utilité, l'excès de carbodiimide ne réagissant pas ou étant hydraté en urée correspondante.

Comme carbodiimides, on peut utiliser la plupart des carbodiimides de commerce, pour autant qu'ils soient compatibles avec le milieu réactionnel choisi. On peut citer, par exemple, le diphénylcarbodiimide, le dicydlohexylcarbodiimide (DCC), le diisopropylcarbodiimide, le 1-éthyl-3(3-diméthylamino-propyl)-carbodiimide (EDC), etc. En général, la nature des substituants fixés aux atomes d'azote de ces diimides n'a pas une grande importance et n'influe que sur leur réactivité relative. Cependant, l'EDC étant soluble dans l'eau où la CMC est également soluble, on l'utilise volontiers dans la présente invention.

La réaction entre la CMC et le carbodiimide s'effectue très simplement en mettant, de préférence, les réactifs en présence sous agitation à température ordinaire ou en chauffant modérément, par exemple jusqu'à 60°C, pendant un temps suffisant pour que la réaction s'effectue puis en séparant le produit réticulé par précipitation par adjonction d'un solvant dans lequel il est peu ou pas soluble,tel que l'acétone, le THF, le monoglyme, etc.

La réticulation impliquant vraissemblablement une réaction entre les groupes carboxyliques de la CMC et le carbodiimide, il est utile qu'un taux efficace de ces groupes soit disponible et, pour ela, il faut partiellement neutraliser l'alcalinité de la CMC salifiée en ajoutant au milieu de réaction un acide minéral fort (par exemple HCl ou $H_2SO_4$) et travailler à un pH neutre ou légèrement acide, par exemple entre 3 et 6. De préférence, on travaille à pH 4,5 - 5. Pendant la réaction, il est également judicieux de garder le pH sous contrôle car le pH du milieu peut avoir tendance à remonter, soit parceque la réaction consomme des protons (comme on le verra plus loin), soit parceque la CMC salifiée et partiellement dissoute au départ, se dissout progressivement au cours de la réaction en libérant son alcalinité.

Le produit qui résulte de la réaction ci-dessus possède, déjà à l'état brut, une viscosité nettement plus élevée que la CMC de départ (ou même, suivant le type de carbodiimide utilisé, se présente sous forme d'une gelée). Cependant, par redissolution et reprécipitation (purification), on peut obtenir, quoique avec un rendement moindre, des produits qui, une fois redissous, donnent des solutions de viscosité encore plus élevée à concentration pondérale égale. De toute évidence, la réprécipitation implique un fractionnement, des portions de taux de réticulation de plus en plus élevé étant obtenues au fur et à mesure des reprécipitations.

La viscosité des solutions aqueuses ou gels de CMC réticulée suivant l'invention est modérément stable au cours du temps et diminue nettement après quelques jours de repos à la température ambiante. Cette propriété est avantageuse dans certains cas, notamment si on utilise la CMC réticulée (I) solide comme tampon absorbant de fluides biologiques. Ainsi, le gel ainsi obtenu après imprégnation de CMC solide par un tel fluide se liquéfie après environ 1 jour ou deux, ce qui permet de s'en débarasser aisément dans les effluents sans causer la moindre pollution, la CMC ainsi réticulée ne contenant qu'un taux négligeable de produits non cellulosiques.

Par contre, pour d'autres utilisations, la perte de viscosité (c'est-à-dire, vraisemblablement, du taux de réticulation) peut être un inconvénient et on est parvenu à y remédier en stabilili-

sant la CMC réticulée (I) au moyen d'amines tertiaires, notamment la pyridine ou la pyrazine, ou en la modifiant (éventuellement en augmentant son taux de réticulation) par traitement (réaction b) avec un composé (II) porteur d'au moins deux fonctions réactives choisies parmi les fonctions phénol, thiol, carboxy et amine.

Lorsqu'on fait réagir la CMC (I) avec un composé (II) on obtient une substance qui, dissoute dans l'eau, fournit des solutions de très haute viscosité (une viscosité encore supérieure à celle des solutions de CMC (I)) et ceci à des concentrations pondérales très réduites, ce qui indique qu'une modification ou une augmentation de la réticulation de la CMC (I) a vraissemblablement eu lieu. De plus, la viscosité de telles solutions se conserve mieux avec le temps, ce qui semble indiquer que la stabilité à l'hydrolyse des ponts de réticulation est plus grande que dans le cas de la CMC réticulée (I). Dans ce qui suit, on désignera ce nouveau type de CMC réticulée par le terme de CMC réticulée modifiée.

Comme composé (II) on utilise de préférence les composés de formule générale $Hy^1By^2H$ où $y^1$ et $y^2$, identiques ou différents désignent les groupes -O-, -S-, -COO- et -NR- et R représente H, un radical hydrocarboné monovalent ou, avec $y^1$ et $y^2$ représentant tous deux NR, un radical divalent, les R formant alors un cycle avec les atomes d'azote et le groupe B; et B désigne un radical organique divalent et, notamment, un groupe alcoylénique, arylénique, diarylénique, alcoylarylénique substitué ou non par des restes carboxyliques, alcoyle inférieur ou ester d'alcoyles inférieurs; ou, avec $y^1$ et $y^2$ représentant NR, une liaison $\sigma$, un groupe -CO- ou un groupe -HN-CO-NH-.

Les composés qui se prêtent à la réaction (b) sont extrêment variés. Parmi eux, on peut citer, à titre indicatif, les diamines comme la p-phénylène diamine dont les azotes sont substitués ou non par 1 ou 2 groupes alcoyles, la benzidine, la tolidine, l'éthylène diamine (en) la propylène diamine, la butylenediamine, l'hexaméthylène diamine, la diéthylenetriamine, le 1,4-diamino-cyclohexane, la pyrazine, la pipérazine, l'hydrazine, le carbohydrazide; des diamides comme l'urée; des diols comme l'hydroquinone, le glycol, le polyéthylene glycol, le 1,3-propane-diol, le bis-(p-hydroxyphényl)-méthane, etc.; des composés comportant, à la fois, un

BAD ORIGINAL

groupe hydroxy ou thiol, tels que le p-amino-phénol, le p-amino-thiophénol; des acides aminés tels que la lysine, l'arainine, la cystine, la cystéine, la sérine et d'autres composés similaires.

Comme on l'a vu plus haut, la réaction entre la CMC en solution aqueuse (laquelle est d'ailleurs une solution de carboxyméthylcellulose partiellement neutralisée à l'alcali) et le dérivé de carbodiimide se fait, de préférence, en milieu aqueux ou hydro-organique, de manière identique à ce qui a été préconisé dans la demande suisse No 10582/78 de la Requérante, c'est-à-dire à température ambiante et à un pH de 4,2 - 4,5. Après avoir isolé le composé réticulé CMC (I), on fait réagir celui- ci avec un équivalent ou, de préférence, un excès stoechiométrique du composé II dissous dans l'eau ou un solvant organique hydrocompatible, par exemple de l'éthanol aqueux. Dans ce milieu, il n'est pas indispensable que le composé CMC (I) soit soluble; il peut réagir sous forme de dispersion homogène dans un tel milieu, ce qui permet d'isoler facilement le produit formé en fin de réaction. En ce qui concerne les conditions pour effectuer celle-ci, on préfère opérer à température ordinaire ou avec chauffage léger, par exemple jusqu'à 60°C, à un pH compris entre 4 et 5. Lorsque le composé II contient au moins une fonction amino, on peut le mettre en réaction sous sa forme de base libre ou sous la forme d'un de ses sels, par exemple le chlorhydrate. Dans les cas où on utilise la base libre, il faudra, en général, acidifier quelque peu le milieu réactionnel afin de parvenir à la valeur en pH préférée. Dans le cas où on utilise un chlorhydrate, il pourra être utile d'ajouter une base, par exemple NaOH aqueux, pour parvenir au pH recherché.

Lorsque la réaction est terminée, ce qu'on constate par le fait que le pH du milieu réactionnel ne varie plus, on sépare simplement le produit formé par essorage (s'il n'est pas dissous dans le milieu réactionnel) soit, dans le cas contraire, en commençant par le faire précipiter par adjonction d'une portion de solvant organique hydrocompatible dans lequel il est peu ou pas soluble, tel que l'éthanol, l'acétone, le THF, le dioxanne, etc. Le produit ainsi obtenu (CMC (I) modifiée brute) se redissout facilement dans l'eau en donnant une solution dont la viscosité (à 0,5 %) est nettement plus élevée que celle de la CMC de départ (5 - 10 fois plus

élevée). Cependant, on a constaté avec surprise que, comme dans le cas de la CMC (I) non encore modifiée, on pouvait encore purifier ce produit brut et en obtenir un second produit (CMC (I) modifiée purifiée) dont les propriétés sont encore améliorées. Pour ce faire, il suffit de reprécipiter la solution aqueuse de la CMC(I) modifiée brute par un solvant organique soluble dans l'eau (par exemple l'acétone), et d'isoler le produit solide ainsi formé. La viscosité d'une solution du produit ainsi purifié (en solution à 0,5 %) est considérablement plus élevée que celle de la solution du produit brut (environ 10 fois). Ainsi, à titre d'illustration, si on part de CMC dont la viscosité est (à 0,5 %) d'environ 50 Cp, la CMC (I) brute présente une viscosité (à 0,5 %) d'environ 500 Cp, la CMC (I) modifiée brute accuse en général une viscosité (à 0,5 %) d'environ 1000 à 2000 Cp et la CMC (I) modifiée purifiée une viscosité (à 0,5 %) de 10.000 à 20.000 Cp.

On ne connaît pas, à l'heure qu'il est, la nature exacte des réactions chimiques qui se déroulent lors de la mise en oeuvre du procédé de l'invention; on peut cependant formuler quelques hypothèses basées sur les connaissances générales de la chimie des carbodiimides (voir par exemple F. KURZER & K. DOURAGHI-ZADEH, Chem. Rev. 67. 107-152 (1967).

Lors de la réaction entre le carbodiimide $(R'N)_2C$ (où R' est un reste organique) et les groupes carboxyliques de la CMC qu'on peut représenter par la formule

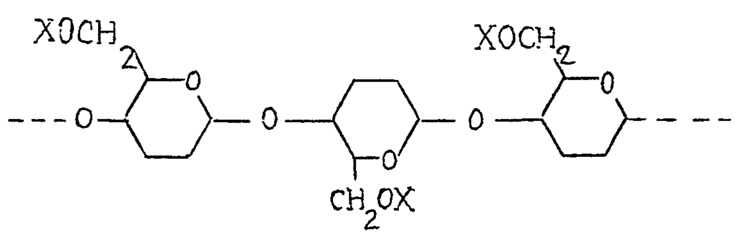

où les hexagones sont des unités glucopyrannosiques et les X représentent, au moins certains d'entre eux, un groupe $-CH_2-COOH$, et les autres H ou alk-OH, il se forme, vraisemblablement, dans un premier stade des groupes O-acyl-isourée $-CH_2-COO-C(R'N)-NHR'$. Ces groupes, très réactifs peuvent se réarranger en groupes N-acylurée $-CH_2-CO-NR'-CO-NHR'$ relativement inertes ou réagir avec un second carboxyle en formant un anhydride (pont anhydride entre deux

BAD ORIGINAL

chaînes de CMC) ou avec un hydroxyle libre en formant un ester (pont ester entre deux chaînes de CMC). L'existence d'un tel composé serait en accord avec les propriétés constatées du composé dénommé CMC réticulée (I) dans la présente description : haute viscosité initiale dans l'eau et stabilité médiocre (à juger par la chute de viscosité au stockage en solution), faible contenu en azote (de l'ordre de 0,5 %).

Lorsqu'on traite la CMC réticulée (I) par un composé bifonctionnel (II) tel que, par exemple, une diamine de formule $B(NRH)_2$, où B et R ont le sens expliqué plus haut, on pourrait s'attendre à une réaction entre les ponts anhydrides (ou même ester) et lesdites fonctions réactives, avec formation, en fin de compte, de nouveaux ponts de type diamide, c'est-à-dire de molécule de formule suivante

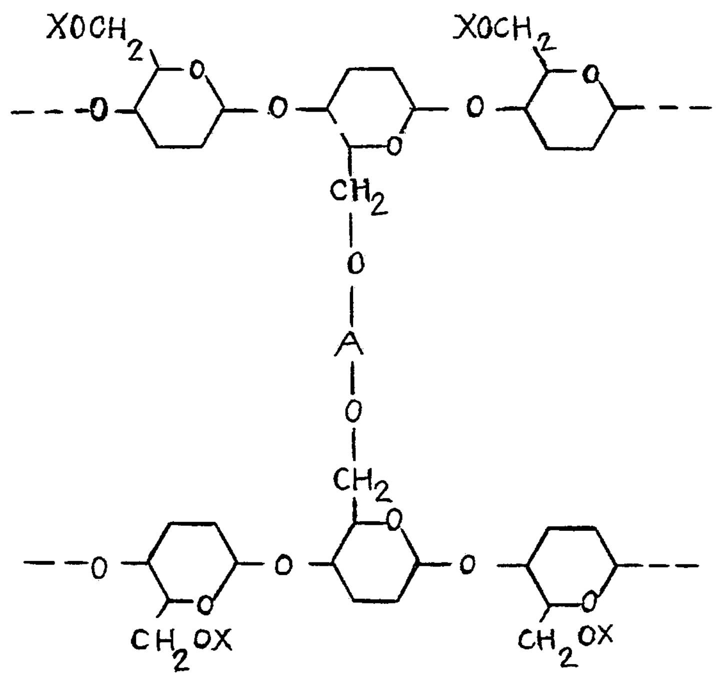

où A est un groupe $B\ (NH-CO-CH_2)_2$, B est défini comme indiqué plus haut et compte, de préférence, de deux à 10 atomes de carbone et X est l'hydrogène, un reste $CH_2COOH$, un groupe HO-alk (inférieur) ou un reste A constituant un pont avec une nouvelle chaîne cellulosique par l'intermédiaire du groupe oxyméthyl $-CH_2O-$ d'une unité glucopyrannosique de cette autre chaîne.

Cependant, cette hypothèse n'est rien moins que certaine car, d'une part, dans plusieurs cas le taux d'azote de la CMC réticulée

ainsi modifiée est trop faible pour étayer la présence d'un nombre significatif de tels ponts diamide et, d'autre-part, des effets de modification similaires sont observés si on utilise des amines tertiaires qui, en toute logique, ne peuvent se prêter à une réaction de substitution telle que celle qui est postulée ici.

On se pose donc la question de savoir si, en fait, les composés (II) n'agissent pas, tout au moins en partie, d'une manière totalement différente de ce qui a été supposé plus haut, par exemple, en tant que simple catalyseurs de la conversion des ponts anhydride en ponts ester avec les groupes hydroxy secondaires de la cellulose.

Quoi qu'il en soit, le dessein de la présente invention n'est pas de fournir une explication scientifique des phénomènes mis en jeu dans ces réactions mais bien de faire progresser l'état de la technique d'obtention des gels hydrophiles et des solutions aqueuses de haute viscosité.

Et en cela, la présente invention remplit parfaitement ses objectifs qui sont, principalement :

a) fournir des solutions aqueuses de très haute viscosité à des concentrations en solides très faibles.

b) fournir des gels hydrophiles à très haut pouvoir absorbant (jusqu'à environ 50 fois leur poids d'eau).

c) fournir un procédé économique pour augmenter le taux de réticulation (et donc la viscosité) de CMC de faibles poids moléculaires (ou de faible taux de substitution) et qui sont particulièrement bon marché.

d) fournir un procédé économique et facilement adaptable à volonté pour obtenir, à partir d'une CMC donnée, une gamme de produits hydrocompatibles de viscosités choisies entre des valeurs relativement basses (de l'ordre de 1000 à 2000 Cp) et très élevées (allant jusqu'aux gels).

Les Exemples qui suivent illustrent l'invention de manière détaillée, mais non limitative, et sont destinés à permettre à l'homme de métier de réaliser l'invention sous ses formes d'exécution typiques.

## Applications Industrielles

### Exemple 1

a) Réaction entre la carboxyméthyl-cellulose (CMC) et un carbodiimide (Préparation de la CMC réticulée (I))

Au moyen de HCl 2N on ajuste à 4,2 le pH d'un litre (0,05 mole) de solution de CMC à 1 % (Type basse viscosité - 50 Cp à la concentration de 0,5 % à 20°C - degré de substitution 0,6). Sous agitation, on ajoute lentement 4 g (0,03 mole) de 1-éthyl-3-(3-diméthylaminopropyl)-carbodiimide (EDC), tout en maintenant le pH à la valeur sus-indiquée par des adjonctions régulières de HCl aqueux. Après stabilisation définitive du pH, on laisse au repos 15 min. puis on neutralise avec du NaOH 2N et on dilue par 1 l. d'acétone. On filtre le précipité floconneux qui s'est séparé, on le lave à l'acétone, on l'essore et on le sèche. On obtient ainsi 10 g (0,05 mole) d'un produit incolore dont le spectre IR présente une bande caractéristique à 1700 $cm^{-1}$ ($\nu CO$).

L'analyse élémentaire du produit sec indique qu'il contient environ 0,45 % d'azote. Une solution de ce produit dans l'eau (0,5 %) présente une viscosité de 600-800 Cp à 20°C au VISCOTESTER VT-02 de HAAKE.

On redissout le solide dans 2 litres d'eau et on le reprécipite à l'acétone ce qui fournit 7,5 g de solide purifié (CMC réticulée (I) purifiée). Ce solide, dissous dans l'eau au taux de 0,5 % fournit une solution de viscosité $\eta$ = 5000 Cp à 20°C. Cette viscosité, après 2 jours à température ambiante, est tombée à 3000 Cp, à 1000 Cp après 6 jours et à 400 Cp après 18 jours.

On a répété à plusieurs reprises la réaction ci-dessus et on a observé des résultats très similaires. L'analyse d'azote du produit lavé à l'acétone et séché était de l'ordre de 0,4 - 0,5 %.

b) Réaction de l'intermédiaire ci-dessus avec le composé II (préparation de la CMC réticulée modifiée)

On dissout 0,2 g (0,004 mole) d'hydrate d'hydrazine (II; $Y^1 = Y^2$ = NH; B = liaison $\sigma$ ) dans 200 ml d'alcool à 85 %. Dans cette solution, on disperse intimement 2 g (0,01 mole) du dérivé de CMC obtenu comme décrit en (a) ci-dessus puis on ajuste à 4,2-4,5 le pH de cette dispersion avec du HCl 2N et le maintient à cette

valeur par des adjonctions nouvelles éventuelles de HCl aqueux jusqu'à stabilisation complète ce qui prend environ 1/2 à 1 h (on peut également utiliser le chlorhydrate d'hydrazine à la place de la base libre, auquel cas, le pH sera ajusté initialement à 4,2-4,5 au moyen de soude caustique 2N). Puis, après 1 h de repos, on neutralise à pH 7 (NaOH 2N), on filtre le solide, le lave avec EtOH 85 % puis avec de l'éthanol pur, et finalement à l'acétone; puis on le sèche. On recueille ainsi 1,9 g de produit brut qui, dissous dans l'eau, donne une solution dont la viscosité (mesurée à la concentration de 0,5 %) est de 2200 cps. On verse cette solution dans trois volumes d'acétone, ce qui occasionne une reprécipitation; on recueille ce précipité par essorage. Rendement en produit purifié 1,4 g. Ce produit purifié, dissous dans l'eau, donne une solution (0,5 %) de viscosité = 11.000 cps à température ordinaire.

Analyse : trouvé 0,55 % N

## Exemples 2 à 12

Conformément à la description de la partie (b) de l'exemple précédent, on a mis en réaction 2 g de CMC réticulée (1) avec 4 mmole d'agents stabilisants dans le tableau suivant :

TABLEAU I

Réaction entre la CMC réticulée (I) et divers agents bifonctionnels

| Exemple | Composé II (Poids utilisé) | Temps réactionnel (min.) |
|---|---|---|
| 2 | p-Phénylènediamine 0,432 g (4 mmole) | 30 |
| 3 | N,N'-diméthyl-p-phénylènediamine HCl 0,836 g (4 mmole) | 30 |
| 4 | N,N'-tetraméthyl-p-phénylènediamine 0,948 g (4 mmole) | 30 |
| 5 | Benzidine 0,756 g (4 mmole) | 30 |
| 6 | L-cystéine 0,484 g (4 mmole) | 30 |
| 7 | L-lysine 0,365 g (4 mmole) | 30 |
| 8 | Pyrazine 0,320 g (4 mmole) | 30 |
| 9 | Pipérazine 0,344 g (4 mmole) | 30 |
| 10 | Carbohydrazide 0,36 g | 30 |
| 11 | Urée 0,24 g | 60 |
| 12 | Hydroquinone 0,44 g | 55 |

Les produits ont été recueillis et pesés, la viscosité de leur solution a été mesurée, puis ils ont été purifiés comme décrit à l'Exemple 1 et la viscosité des solutions de produit purifié mesurée à nouveau (voir Tableau II).

TABLEAU II

Viscosités des solutions de CMC réticulée modifiée à température ambiante

| Exemple | Rendement (viscosité sol. 0,5 % 20°C) Prod. brut | Prod. purifié |
|---|---|---|
| 2 | 1,9 g ( 800 Cp) | 1,3 g ( 8.000 Cp) |
| 3 | 1,9 g (1.100 Cp) | 1,42 g (14.000 Cp) |
| 4 | 2 g (2.200 Cp) | 1,48 g (12.000 Cp) |
| 5 | 1,9 g (1.100 Cp) | 1,38 g ( 9.800 Cp) |
| 6 | 1,9 g (1.100 Cp) | 1,24 g (21.000 Cp) |
| 7 | 1,95 g ( 600 Cp) | ——— |
| 8 | 1,9 g (1.000 Cp) | 1,42 g (13.000 Cp) |
| 9 | 1,9 g ( 950 Cp) | 1,45 g ( 9.000 Cp) |
| 10 | 1,9 g (1.900 Cp) | 1,32 g (11.200 Cp) |
| 11 | 1,9 g (1.700 Cp) | 1,17 g (10.000 Cp) |
| 12 | 1,9 g (2.300 Cp) | 1,3 g ( ——— ) |

Le taux d'azote des échantillons obtenus dans les essais 2 à 12 a été mesuré et figure au Tableau III ainsi que le rapport, calculé, des équivalents de réactif consommé par rapport aux équivalents -COOH.

TABLEAU III

| CMC réticulée modifiée de l'Exemple No | N % | équivalent de réactif / équivalent de COOH |
|---|---|---|
| 2 | 0,67 | 0,022 |
| 3 | 0,47 | 0.020 |
| 4 | 0.56 | 0.025 |
| 5 | 0.55 | 0.025 |
| 6 | 0.43 | 0.017 |
| 7 | 2.47 | 0.10 |
| 8 | 0.40 | 0.016 |
| 9 | 2.28 | 0.09 |
| 10 | 0.92 | 0.037 |
| 11 | 0.73 | 0.038 |

Finalement, on a déterminé la stabilité des solutions de CMC réticulée modifiée issues des échantillons 2 à 12 en mesurant leur viscosité à intervalles réguliers. Les résultats sont rassemblés au Tableau IV.

BAD ORIGINAL

TABLEAU IV

Variation de la viscosité, au cours du temps, des solutions aqueuses à 0,5 %, 20°C de CMC réticulée modifiée (VISCOTESTER VT02, HAAKE)

| Echantillon de l'Ex. No | Viscosité en Cp après x jours 1 | 2 | 3 | 4 | 5 | 6 | 7 | 8 | 9 | (x) |
|---|---|---|---|---|---|---|---|---|---|---|
| 2 | 8000 | 7000 | 6000 | 5000 | -- | 3400 | 2900 | 2500 | 2100 | -- |
| 3 | 14000 | 12200 | 11000 | 7500 | -- | -- | -- | -- | 2500 | -- |
| 4 | 11500 | 12000 | 10000 | 8500 | 7000 | -- | 5200 | -- | -- | 2200 (20) |
| 5 | 9000 | 9800 | 9800 | 9000 | 8000 | 7000 | 6000 | -- | -- | -- |
| 6 | 15000 | 8000 | -- | 3800 | 3100 | -- | -- | 2200 | -- | -- |
| 7 | -- | -- | -- | -- | -- | -- | -- | -- | -- | -- |
| 8 | 12000 | 11000 | -- | 7800 | 6200 | 5000 | -- | -- | -- | 2100 (20) |
| 9 | 8000 | 5500 | 3700 | -- | 2000 | 1800 | -- | 1750 | -- | 1500 (17) |
| 10 | 11200 | 11000 | -- | 9500 | 8500 | 7500 | -- | 6200 | -- | 2200 (20) |
| 11 | 9000 | 8000 | -- | 3800 | 3100 | -- | -- | 2200 | -- | -- |
| 12 | 10000 | -- | -- | -- | -- | -- | 3700 | -- | -- | -- |

Exemples 13 et 14

Les essais ci-dessus ont été répétés identiquement en utilisant comme composés II, respectivement l'hydrazine (essai 13, viscosité initiale 8.000 Cp) et l'éthylène diamine (viscosité initiale 4.600 Cp essai 14). Les résultats de stabilité figurent ci-dessous.

TABLEAU V

| Echantillon de l'Ex. No | Viscosité en Cp après x jours 1 | 2 | 3 | 4 | 5 | 6 | 7 | 8 | 9 | (x) |
|---|---|---|---|---|---|---|---|---|---|---|
| 13 | 11000 | 11000 | 10800 | 9500 | -- | 8800 | 8000 | 7500 | -- | 2700 (20) |
| 14 | 2500 | 1700 | 1300 | 1200 | -- | -- | -- | -- | 300 | -- |

Les résultats des Tableaux IV et V montrent que, dans certains cas, la viscosité après 1 jour est plus élevée que la viscosité initiale, celle-ci ne décroissant ensuite que lentement. Ces résultats montrent aussi que l'efficacité des composés (II) pour augmenter

et stabiliser les viscosités des solutions est très variable, à savoir l'hydrazine est efficace alors que l'éthylène diamine est moins efficace.

Exemple 15

Réticulation de la carboxyméthyl-hydroxyéthyl-cellulose (CMHEC type 37 L de HERCULES INC)

a) Dans 4 l. d'eau, on dissout 40 g (0,184 mole) d'une CMC dont le degré de substitution (D.S) en -COOH est de 0,3 et le degré de substitution en $-CH_2-CH_2OH$ est de 0,7 (le degré de substitution maximum de la cellulose est, en théorie, de 3,0 puisque chaque unité d'anhydro-glucose comporte un -OH primaire et deux -OH secondaires). On ajoute du HCl 10 % de manière à porter le pH à 4,2-4,5 puis, sous agitation, on ajoute 4 g (0,042 mole) d'EDC. Le pH ayant tendance à remonter, on le maintient dans l'intervalle précité par adjonction régulière de HCl 10 % puis, après 30 min. d'agitation à température ambiante, on neutralise à pH 7 avec une solution de NaOH 10 % et on verse le tout dans 10 l. d'acétone. On recueille ensuite le précipité qui s'est formé, on l'essore, le lave et le sèche; rendement 42 g. On redissout ce produit dans 3,2 l. d'eau et on le reprécipite par adjonction d'une nouvelle portion de 10 l. d'acétone. On filtre et sèche le produit purifié (rendement 21 g); une solution à 0,5 % de ce produit dans l'eau possède une viscosité de 4.800 Cp à 20°, alors que la viscosité d'une solution identique du produit de départ n'est que de 3 à 4Cp.

b) On procède ensuite de manière analogue à ce qui est décrit aux Exemples précédents et on traite 21 g de CMHEC réticulée avec 2 g d'hydrate d'hydrazine, le tout en suspension dans 2 l. d'éthanol à 80 % , pH 4-4,5. Après 30 min., on précipite et recueille 17,4 g de produit modifié qu'on sèche et dont on prépare une solution aqueuse à 0,5%. Cette solution présente une viscosité de 6000 Cp à 20°C.

Exemple 16

On dissout 30 g (0,143 mole) de CMC, type BT 52 de LAMBERTI FRATELLI (Italie) ayant un D.S. de 0,6, dans 4 l. d'alcool aqueux à 50 %. Tout en agitant énergiquement, on ajoute 8 g (0,04 mole) de dicyclohexylcarbodiimide (DCC) en solution dans 50 ml d'EtOH (pH 7,1). Après 30 min., on constate que le pH est de 7,6 et on

BAD ORIGINAL

abaisse à 4,6 au moyen de HCl aqueux à 10 %. On continue à agiter tout en maintenant le pH sous contrôle à 4,5-4,6 et, au cours des 30 min. qui suivent, on observe la formation d'un précipité volumineux et gonflé. On neutralise le mélange réactionnel et le verse dans 5 l. d'acétone. On récolte le produit blanc qui s'est formé, on l'essore, le lave à l'acétone et le sèche à l'air. Rendement 29 g. Par analyse élémentaire, on constate que la teneur en azote de ce produit réticulé est de 0,47 %. Au contact de l'eau, il se gélifie mais ne se dissout pas; la quantité d'eau qu'il peut absorber est de l'ordre de 50 ml/g. Ce gel, abandonné à température ordinaire, se dégrade lentement et, après 48 h. environ, il a formé une solution visqueuse qui peut être diluée par l'eau et ainsi éliminée dans les eaux usées. Cette CMC réticulée est, par conséquent, particulièrement utile pour la préparation de tampons absorbants, dégradables sans provoquer de pollution, et adaptés à la fabrication d'articles hygiéniques.

## REVENDICATIONS

1. Procédé de réticulation de la carboxyméthylcellulose (CMC) caractérisé par le fait qu'on la fait réagir avec un carbodiimide ce qui fournit une CMC réticulée.

2. Procédé suivant la revendication 1, caractérisé par le fait qu'on utilise 0,5 à 2 équivalents molaires de carbodiimide par équivalent de groupe -COOH de la CMC.

3. Procédé suivant la revendication 1, caractérisé par le fait qu'on opère dans l'eau ou un solvant hydrocompatible, notamment l'alcool aqueux, à un pH de 4 à 4,5, et à une température de 20 à 60°C.

4. Procédé suivant la revendication 2, caractérisé par le fait que le carbodiimide est choisi parmi le dicyclohexylcarbodiimide (DCC) et le 1-éthyl-3-(3-diméthylaminopropyl)-carbodiimide (EDC)

5. Procédé suivant la revendication 3, caractérisé par le fait qu'on fait réagir la CMC avec le carbodiimide en solution aqueuse, qu'on précipite le produit par addition d'acétone et qu'on purifie celui-ci par redissolution dans l'eau et reprécipitation à l'acétone.

6. Procédé suivant la revendication 1, caractérisé par le fait qu'on stabilise la CMC réticulée obtenue et, éventuellement, augmente son taux de réticulation en la traitant par un composé (II) porteur de deux fonctions réactives choisie parmi les fonctions phénol, thio, carboxyl et amine ce qui fournit une CMC réticulée modifiée.

7. Procédé suivant la revendication 6, caractérisé par le fait que le composé (II) a la formule générale $HY^1BY^2H$ où $Y^1$ et $Y^2$, identiques ou différents, désignent des groupes -O-, -S-, -COO-, et -NR- et R représente H, un radical hydrocarboné monovalent ou, avec $Y^1$ et $Y^2$ représentant tous deux NR, un radical divalent, les R formant alors un cycle avec les atomes d'azote et le groupe B; et B désigne un radical organique divalent, notamment un groupe alcoylénique, arylénique, diarylénique, alcoylarylénique, substitué ou non par des restes carboxyliques, alcoyle inférieurs ou esters d'alcoyles inférieurs; ou, avec $Y^1$ et $Y^2$ représentant NR, une

BAD ORIGINAL

0010519

liaison σ, un groupe -CO- ou un groupe -HN-CO-NH-.

8. Procédé suivant la revendication 6, caractérisé par le fait qu'on opère la modification de la CMC réticulée en faisant réagir le composé (II) en milieu aqueux ou dans un solvant hydrocompatible tel que l'alcool ou l'alcool aqueux.

9. Procédé suivant la revendication 8, caractérisé par le fait qu'on utilise un équivalent ou un excès molaire du composé (II) par rapport aux groupes -COOH de départ ayant réagi avec le carbodiimide et qu'on travaille sous agitation et à une température de 20 à 60°C environ.

10. Procédé suivant la revendication 9, caractérisé par le fait qu'on isole la CMC réticulée modifiée par précipitation au moyen d'acétone ou d'un solvant équivalent et qu'on la purifie par redissolution dans l'eau et reprécipitation à l'acétone.

11. Procédé pour stabiliser la CMC réticulée obtenue suivant la revendication 1, caractérisé par le fait qu'on la traite par un alcool ou la pyridine en solution aqueuse ou dans un mélange d'eau et d'un solvant hydrosoluble.

12. Procédé de réticulation de la carboxyméthylcellulose et ses dérivés hydroxyalcoylés, caractérisé par le fait que

a) on met en contact, à pH acide, ladite carboxyméthylcellulose (CMC) ou ses dérivés avec un carbodiimide de formule $C(=NR')_2$ où R' est un reste organique, ce qui fournit, par réaction avec les groupes carboxyle de la CMC, une carboxyméthylcellulose préréticulée puis

b) on fait réagir ce polymère préréticulé avec une diamine (ou diamide) de formule $B(NH_2)_2$ où B est une liaison σ, un groupe -CO- ou HN-CO-NH- ou un groupe aliphatique ou aromatique divalent ce qui provoque la formation de CMC réticulée stabilisée avec élimination d'urée substituée $CO(NHR')_2$.

13. Procédé selon la revendication 12, caractérisé par le fait qu'on fait réagir la CMC avec le carbodiimide en solution aqueuse, que l'on précipite le produit préréticulé par addition d'acétone, qu'on isole celui-ci et qu'on fait réagir le produit isolé avec une diamine à un pH de 4,2 à 4,7 en milieu éthanol 85 %, et qu'on isole le produit final par filtration, lavage à l'acétone et séchage.

14. Procédé selon la revendication 12, caractérisé par le fait qu'on mélange la CMC de façon intime avec le carbodiimide, qu'on reprend le mélange sec avec une quantité minime d'eau acide pour permettre la réaction entre la CMC et le carbodiimide, puis qu'on reprend le tout avec de l'alcool à 95 % pour obtenir une suspension, ladite suspension étant ensuite traitée avec la diamine, puis qu'on isole le polymère réticulé du mélange par filtration, lavage et séchage.

15. Procédé selon la revendication 12, caractérisé par le fait qu'on fait réagir la CMC avec le carbodiimide en solution aqueuse à pH 4,2-4,7, puis qu'on fait réagir le produit intermédiaire formé en solution avec la diamine ce qui donne une gelée d'où l'on précipite la CMC réticulée par addition d'un solvant organique.

Numero de la demande 0010519

RAPPORT DE RECHERCHE EUROPEENNE

EP 79 81 0120

| Catégorie | DOCUMENTS CONSIDERES COMME PERTINENTS — Citation du document avec indication, en cas de besoin, des parties pertinentes | Revendication concernee | CLASSEMENT DE LA DEMANDE (Int. Cl. 3) |
|---|---|---|---|
| | US - A - 2 937 154 (HAROLD P. BROWN et al.)<br>* Colonne 3, ligne 42 - colonne 4, ligne 35; revendications *<br>-- | 1 | C 08 B 15/00 |
| | BIOTECHNOLOGY AND BIOENGINEERING, vol. XIX, 1977, T.R. JACK: "The enzymatic conversion of L-histidine to urocanic acid by whole cells of micrococcus luteus immobilized on carbodiimide activated carboxymethylcellulose", pages 631-648<br>* Page 637, dernier alinéa; page 638 *<br>-- | 1 | DOMAINES TECHNIQUES RECHERCHES (Int. Cl. 3)<br>C 08 B 15/00<br>15/06<br>15/10<br>C 08 K 5/29<br>A 61 L 15/00 |
| A | US - A - 2 415 043 (JOHN B. RUST)<br>* Revendications *<br>-- | 1 | |
| A | BE - A - 541 048 (BAYER)<br>* Revendications *<br>-- | 1 | |
| A | US - A - 3 589 364 (WALTER LEE DEAN et al.)<br>* Abrégé; revendications *<br>-- | 1 | CATEGORIE DES DOCUMENTS CITES<br>X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cite pour d'autres raisons |
| A | US - A - 3 457 256 (JOSEPH STEIGMAN et al.)<br>* Colonne 2, lignes 40-71; colonne 3,; revendications *<br>---- | 1 | |
| X | Le présent rapport de recherche a été établi pour toutes les revendications | | &: membre de la même famille, document correspondant |

| Lieu de la recherche | Date d'achevement de la recherche | Examinateur |
|---|---|---|
| La Haye | 18-01-1980 | LENSEN |

OEB Form 1503.1 06.78

BAD ORIGINAL